# EUROPEAN PATENT APPLICATION

(11) **EP 4 575 613 A1**
(43) Date of publication of application: **25.06.2025**
(21) Application number: 23854826.7
(22) Date of filing: 07.08.2023
(51) Int. Cl.: G02B 27/28, G02B 5/30

(54) **OPTICAL ISOLATOR AND OPTICAL MONITORING METHOD**

(30) Priority: 17.08.2022 JP 2022130059
(71) Applicant: Nippon Electric Glass Co., Ltd., Otsu-shi, Shiga 520-8639 (JP)
(72) Inventor: SUZUKI, Futoshi, Otsu-shi, Shiga 520-8639 (JP); FURUYAMA, Tadahito, Otsu-shi, Shiga 520-8639 (JP)
(74) Representative: Tetzner, Michael
(86) International application number: PCT/JP2023/028749
(87) International publication number: WO 2024/038792

(57) **Abstract**

Provided is an optical isolator that, upon damage of an element in an optical isolator, can easily detect the damage of the element. An optical isolator 1 includes: a first polarizer 2 provided on a light incidence side of the optical isolator 1; a second polarizer 3 provided on a light exit side of the optical isolator 1; and a Faraday rotator 4 provided between the first polarizer 2 and the second polarizer 3, wherein assuming that an angle of a light transmission axis of the second polarizer 3 inclined to a light transmission axis of the first polarizer 2 is a placement angle of the second polarizer 3, the placement angle of the second polarizer 3 is different from a rotation angle of the Faraday rotator 4.

## Description

### [Technical Field]

The present invention relates to optical isolators and optical monitoring methods for monitoring the intensity of transmitted light of an optical isolator.

### [Background Art]

Optical isolators are magneto-optic elements that propagate light in a single direction and block reflected return light. Optical isolators are used in laser oscillators for use in optical communication systems, laser processing systems, and so on. Patent Literature 1 below discloses, as such an optical isolator, an optical isolator including: a Faraday rotator; a first polarizer disposed at one end of the Faraday rotator in the direction of the optical axis; and a second polarizer disposed at the other end of the Faraday rotator in the direction of the optical axis.

### [Citation List]

### [Patent Literature]

[PTL 1]
   JP-A-2003-322826

### [Summary of Invention]

### [Technical Problem]

In recent laser processing, the output power of laser light has become higher. However, increasing the output power of laser light may cause elements, such as a Faraday rotator and a polarizer, in the optical isolator to be damaged. If these elements are damaged, laser light cannot transmit through the optical isolator, which presents a problem of the laser system not functioning.

Therefore, if an element of an optical isolator is damaged, it must be immediately replaced. However, a Faraday rotator in an optical isolator is contained in a magnet and, therefore, it is difficult to visually confirm that the Faraday rotator has been damaged. Also, it is difficult to visually confirm that a polarizer has been damaged, because the polarizer is fixed to a holder.

As just described, there has heretofore been a problem of difficulty in confirming, even if a laser system fails, where on the laser system a failure is occurring.

An object of the present invention is to provide an optical isolator and an optical monitoring method both of which, upon damage of an element in an optical isolator, can easily detect the damage of the element.

### [Solution to Problem]

A description will be given of respective aspects of an optical isolator and an optical monitoring method both of which can solve the above problem.

An optical isolator of aspect 1 includes: a first polarizer provided on a light incidence side of the optical isolator; a second polarizer provided on a light exit side of the optical isolator; and a Faraday rotator provided between the first polarizer and the second polarizer, wherein assuming that an angle of a light transmission axis of the second polarizer inclined to a light transmission axis of the first polarizer is a placement angle of the second polarizer, the placement angle of the second polarizer is different from a rotation angle of the Faraday rotator.

An optical isolator of aspect 2 is the optical isolator according to aspect 1, wherein a sum of the placement angle of the second polarizer and the rotation angle of the Faraday rotator is preferably within a range of 90° ± 2°.

An optical isolator of aspect 3 is the optical isolator according to aspect 1 or 2, wherein when the placement angle of the second polarizer is 45° + A° and the rotation angle of the Faraday rotator is 45° - A°, A is preferably not less than 0.5 and not more than 10.

An optical isolator of aspect 4 is the optical isolator according to any one of aspects 1 to 3, wherein the optical isolator may further include a light exit portion that allows part of light incident on the second polarizer to be extracted therethrough.

An optical isolator of aspect 5 is the optical isolator according to aspect 4, wherein a tap port or a photodiode may be connected directly or indirectly to the light exit portion.

An optical isolator of aspect 6 is the optical isolator according to any one of aspects 1 to 5, wherein the Faraday rotator preferably includes a Faraday element disposed inside a tubular magnet and made of a paramagnetic material through which light transmits.

An optical isolator of aspect 7 is the optical isolator according to aspect 6, wherein the Faraday element made of a paramagnetic material is preferably a glass material.

An optical isolator of aspect 8 is the optical isolator according to aspect 7, wherein the glass material preferably contains, in terms of % by mole, 20% to 80% Tb₂O₃, 20% to 70% B₂O₃+P₂O₅, and 0% to 45% SiO₂.

An optical monitoring method of aspect 9 is an optical monitoring method for monitoring an intensity of transmitted light of an optical isolator that includes: a first polarizer provided on a light incidence side of the optical isolator; a second polarizer provided on a light exit side of the optical isolator; and a Faraday rotator provided between the first polarizer and the second polarizer, and the optical monitoring method includes: a step of extracting part of light by allowing the second polarizer to reflect part of light incident on the second polarizer; and a step of monitoring the intensity of transmitted light of the optical isolator by measuring an intensity of the extracted part of light.

An optical monitoring method of aspect 10 is the optical monitoring method according to aspect 9, wherein an intensity of laser light allowed to transmit through the optical isolator is preferably not less than 300 mW and not more than 150 W.

### [Advantageous Effects of Invention]

The present invention enables provision of an optical isolator and an optical monitoring method both of which, upon damage of an element in an optical isolator, can easily detect the damage of the element.

### [Brief Description of Drawings]

[Fig. 1]

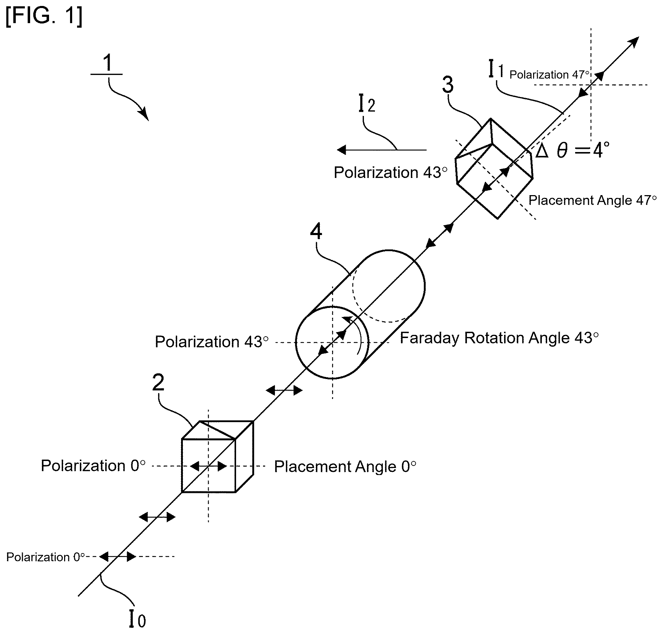

   Fig. 1 is a schematic diagram for illustrating an optical path when light travels in a forward direction in an optical isolator according to one embodiment of the present invention.
[Fig. 2]

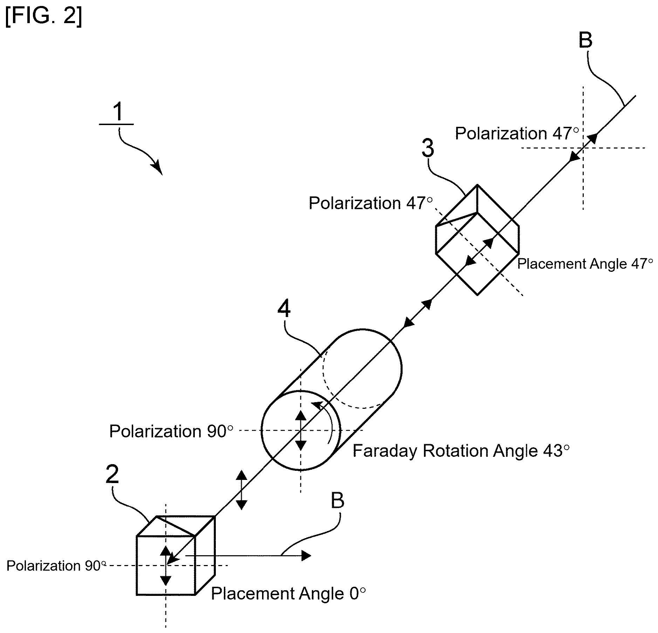

   Fig. 2 is a schematic diagram for illustrating an optical path when light travels in a backward direction in the optical isolator according to the one embodiment of the present invention.
[Fig. 3]

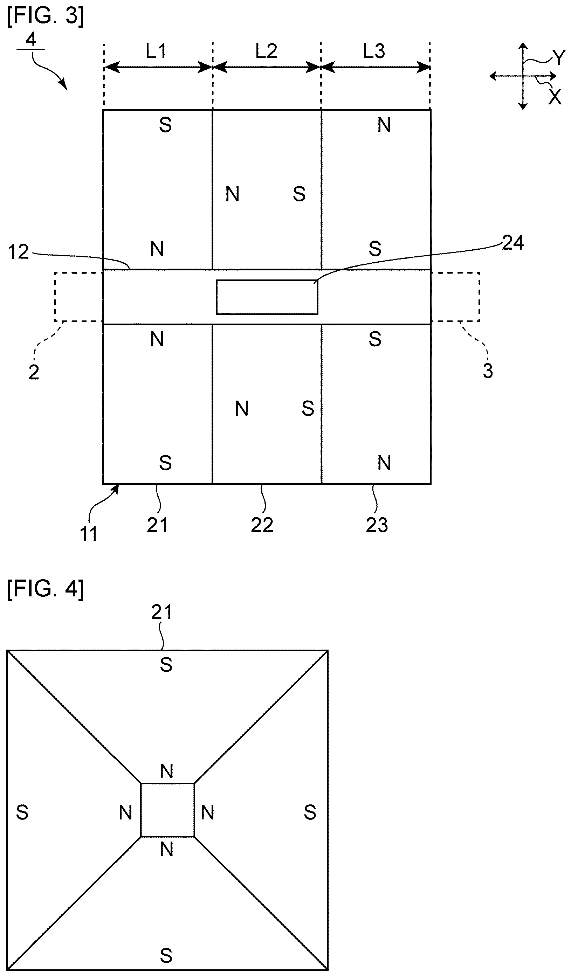

   Fig. 3 is a schematic cross-sectional view showing a Faraday rotator constituting part of the optical isolator according to the one embodiment of the present invention.
[Fig. 4]
   Fig. 4 is a view showing an example of a structure of a first magnet.
[Fig. 5]

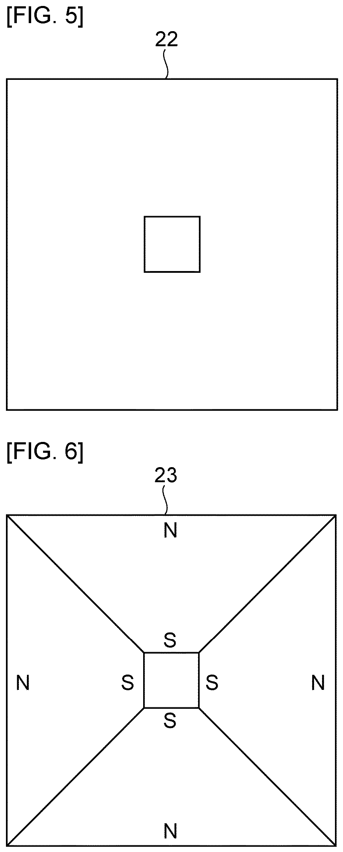

   Fig. 5 is a view showing an example of a structure of a second magnet.
[Fig. 6]
   Fig. 6 is a view showing an example of a structure of a third magnet.
[Fig. 7]

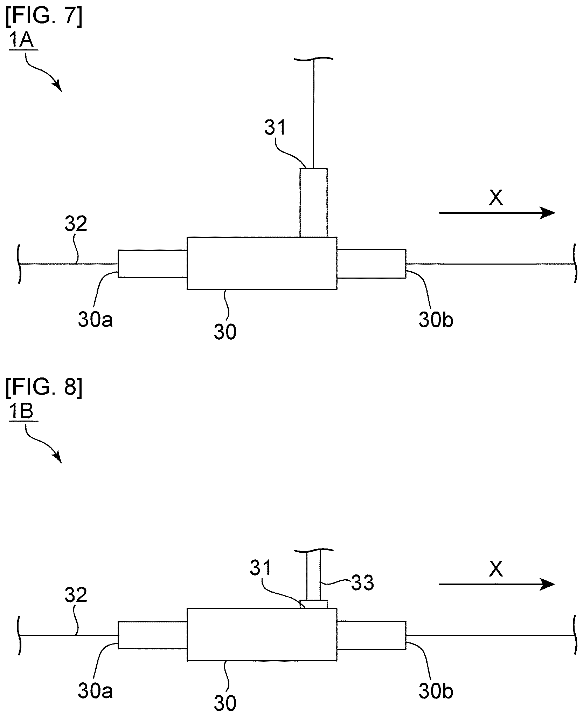

   Fig. 7 is a schematic view for illustrating an example of a light exit portion.
[Fig. 8]
   Fig. 8 is a schematic view for illustrating another example of a light exit portion.
[Fig. 9]

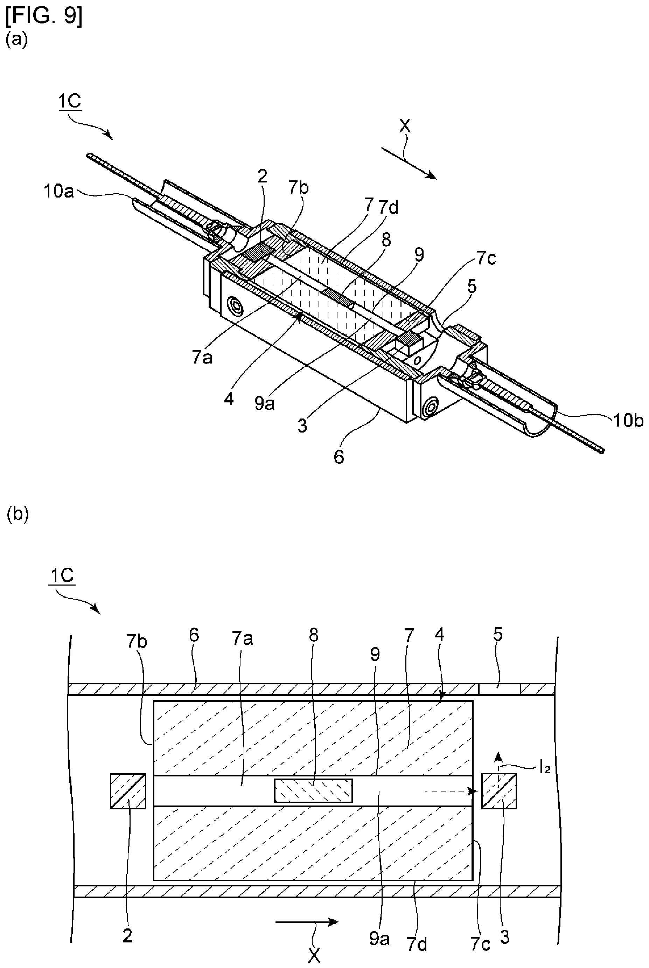

   Fig. 9(a) is a schematic cross-sectional view of the optical isolator according to the one embodiment of the present invention along the direction of an optical axis, and Fig. 9(b) is a simplified view of the cross section shown in Fig. 9(a).
[Fig. 10]

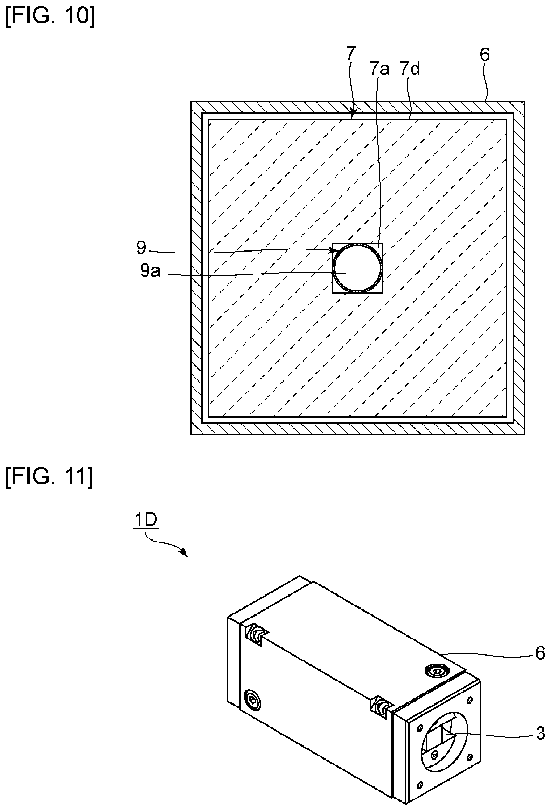

   Fig. 10 is a schematic cross-sectional view of the optical isolator according to the one embodiment of the present invention along a direction orthogonal to the direction of the optical axis.
[Fig. 11]
   Fig. 11 is a perspective view of an optical isolator according to a variation of the present invention.
[Fig. 12]

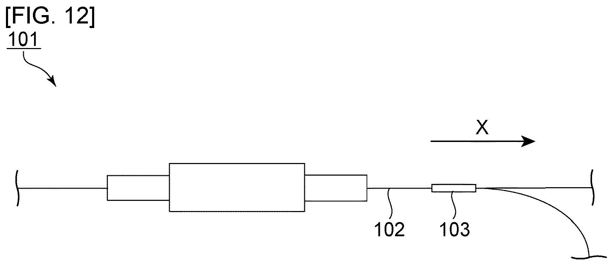

   Fig. 12 is a schematic view for illustrating a light exit portion in a comparative example.

### [Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

### [Optical Isolator]

Fig. 1 is a schematic diagram for illustrating an optical path when light travels in a forward direction in an optical isolator according to one embodiment of the present invention. Fig. 2 is a schematic diagram for illustrating an optical path when light travels in a backward direction in the optical isolator according to the one embodiment of the present invention.

As shown in Fig. 1 and 2, an optical isolator 1 includes a first polarizer 2, a second polarizer 3, and a Faraday rotator 4. The first polarizer 2 is provided on a light incident side. The second polarizer 3 is provided on a light exit side. The Faraday rotator 4 is provided between the first polarizer 2 and the second polarizer 3.

In this embodiment, assuming that the angle of the light transmission axis of the second polarizer 3 inclined to the light transmission axis of the first polarizer 2 is a placement angle of the second polarizer 3, the placement angle of the second polarizer 3 is different from the rotation angle of the Faraday rotator 4.

Hereinafter, a description will be given of an example of an optical design in which the placement angle of the first polarizer 2 is 0°, the placement angle of the second polarizer 3 is 47°, and the rotation angle of the Faraday rotator 4 is 43°.

As shown in Fig. 1, light I₀ having entered the optical isolator 1 passes through the first polarizer 2, is thus converted to linearly polarized light, and then enters the Faraday rotator 4. The light having entered the Faraday rotator 4 is rotated 43° by the Faraday rotator 4 and then enters the second polarizer 3. The light I₀ having entered the second polarizer 3 passes through the second polarizer 3 with a plane of polarization inclined at an angle of 47°. At this time, the placement angle of the second polarizer 3 and the angle of light rotated by the Faraday rotator 4 are different and the difference θ between them is 4°. Therefore, part of the light having entered the second polarizer 3 does not travel linearly through the second polarizer 3 and can be extracted as reflected light I₂. By measuring the intensity of the extracted reflected light I₂, the intensity of transmitted light of the optical isolator 1 can be monitored.

Furthermore, as shown in Fig. 2, reflected return light B of the light I₁ having passed through the second polarizer 3 passes through the second polarizer 3 with a plane of polarization inclined at an angle of 47°. The reflected return light B having passed through the second polarizer 3 is rotated another 43° by the Faraday rotator 4 and thus forms an orthogonal plane of polarization inclined 90° to the light transmission axis of the first polarizer 2. Therefore, the reflected return light B cannot travel linearly through the first polarizer 2. Thus, the function as the optical isolator 1 is exerted.

As seen from the above, the optical isolator 1 according to this embodiment can always monitor the intensity of transmitted light. Therefore, even if any element of the optical isolator 1 is damaged and the intensity of transmitted light thus decreases, it can be easily detected that the element has been damaged. Particularly, the reflected light I₂ can be extracted always at a constant light intensity unlike the reflected return light B and can be therefore suitably used for monitoring the intensity of transmitted light.

In this embodiment, the sum of the placement angle of the second polarizer 3 and the rotation angle of the Faraday rotator 4 is preferably 90° ± 2° as in the above-described example of an optical design, more preferably 90° ± 1°, and particularly preferably 90°. In this case, the reflected return light B can be more certainly blocked in the first polarizer 2.

Furthermore, in this embodiment, when the placement angle of the second polarizer 3 is 45° + A° and the rotation angle of the Faraday rotator 4 is 45° - A°, A is preferably not less than 0.5, more preferably not less than 1, even more preferably not less than 2, preferably not more than 10, more preferably not more than 7, and even more preferably not more than 5. When A is the above lower limit or more, the intensity of transmitted light of the optical isolator 1 can be more certainly monitored. Moreover, when A is the above upper limit or less, the amount of transmitted light passing through the second polarizer 3 can be further increased.

Hereinafter, a description will be given of components constituting the optical isolator.

### (Faraday Rotator)

Fig. 3 is a schematic cross-sectional view showing the Faraday rotator constituting part of the optical isolator according to the one embodiment of the present invention. The letters N and S in Fig. 3 represent magnetic poles. The same applies to the other figures to be described hereinafter.

The Faraday rotator 4 shown in Fig. 3 includes: a magnetic circuit 11 provided with a through hole 12 through which light passes; and a Faraday element 24 disposed inside the through hole 12. The Faraday element 24 is made of a paramagnetic material capable of transmitting light.

The magnetic circuit 11 includes a first magnet 21, a second magnet 22, and a third magnet 23, each provided with a through hole. The magnetic circuit 11 is formed of the first magnet 21, the second magnet 22, and the third magnet 23 coaxially arranged in this order in a front-to-rear direction. The term "coaxially arranged" means that the above magnets are arranged with substantially their central portions laid one on another as viewed in the direction X of the optical axis. In this embodiment, the through hole 12 in the magnetic circuit 11 is formed by the connection of the respective through holes in the first magnet 21, the second magnet 22, and the third magnet 23 one to another.

The Faraday element 24 can be disposed inside the through hole 12 in the magnetic circuit 11. Thus, a Faraday rotator 4 can be constructed. The cross-sectional shape of the Faraday element 24 and the cross-sectional shape of the through hole 12 in the magnetic circuit 11 need not necessarily agree with each other, but should preferably agree with each other from the perspective of application of a homogeneous magnetic field.

The cross-sectional area of the through hole 12 in the magnetic circuit 11 is preferably not more than 100 mm². If the cross-sectional area of the through hole 12 becomes excessively large, a sufficient flux density cannot be obtained. If the cross-sectional area thereof is too small, the Faraday element 24 is difficult to dispose inside the through hole 12. The cross-sectional area of the through hole 12 is preferably 3 mm² to 80 mm², more preferably 4 mm² to 70 mm², and even more preferably 5 mm² to 60 mm², and particularly preferably 7 mm² to 50 mm².

The cross-sectional shape of the through hole 12 in the magnetic circuit 11 is not particularly limited and may be rectangular or circular. The cross-sectional shape of the through hole 12 in the magnetic circuit 11 is preferably rectangular from the perspective of ease of assembly or preferably circular from the perspective of application of a homogeneous magnetic field.

Fig. 4 is a view showing an example of a structure of the first magnet (a view from the direction X of the optical axis). The first magnet 21 shown in Fig. 4 is formed by a combination of four magnet pieces and has a rectangular (square) cross-sectional shape as a whole. The first magnet 21 may have a circular cross-sectional shape as a whole. The number of magnet pieces constituting the first magnet 21 is not limited to the above. For example, the first magnet 21 may be formed by a combination of six or eight magnet pieces. By forming the first magnet 21 in combination of a plurality of magnet pieces, the magnetic field can be effectively increased. However, the first magnet 21 may be constituted by a single magnet.

Fig. 5 is a view showing an example of a structure of the second magnet (a view from the direction X of the optical axis). The second magnet 22 shown in Fig. 5 is constituted by a single magnet. The second magnet 22 has a rectangular (square) cross-sectional shape. The second magnet 22 may have a circular cross-sectional shape. However, the second magnet 22 may be formed by a combination of two or more magnet pieces.

Fig. 6 is a view showing an example of a structure of the third magnet (a view from the direction X of the optical axis). The third magnet 23 shown in Fig. 6 is, like the first magnet 21, formed by a combination of four magnet pieces and has a rectangular (square) cross-sectional shape as a whole. The third magnet 23 may have a circular cross-sectional shape as a whole. By forming the third magnet 23 in combination of a plurality of magnet pieces, the magnetic field can be effectively increased. However, the third magnet 23 may be formed by a combination of six or eight magnet pieces or constituted by a single magnet.

In this embodiment, light is allowed to enter first through the first magnet 21. Furthermore, in the magnetic circuit 11, the first magnet 21 and the third magnet 23 are magnetized in directions Y perpendicular to the direction X of the optical axis and their magnetization directions are opposite to each other. Specifically, the first magnet 21 is magnetized in a direction Y perpendicular to the direction X of the optical axis to have a north pole located toward the through hole 12. The third magnet 23 is magnetized in a direction Y perpendicular to the direction X of the optical axis to have a south pole located toward the through hole 12. The second magnet 22 is magnetized in a direction parallel to the direction X of the optical axis to have a north pole located toward the first magnet 21. Herein, in the present specification, the direction where light passes through the through hole 12 in the magnetic circuit 11 is defined as the direction X of the optical axis.

Light may be allowed to enter first through the third magnet 23. In this case, it is also possible that the first magnet 21 is magnetized to have a south pole located toward the through hole 12, the third magnet 23 is magnetized to have a north pole located toward the through hole 12, and the second magnet 22 is magnetized to have a south pole located toward the first magnet 21.

The first magnet 21, the second magnet 22, and the third magnet 23 are each formed of a permanent magnet. Rare-earth magnets are particularly preferred as the permanent magnet and, among them, a magnet consisting mainly of samarium-cobalt (Sm-Co) or a magnet consisting mainly of neodymium-iron-boron (Nd-Fe-B) is preferred.

The length L1 of the first magnet 21 is, for example, preferably not less than 5 mm, more preferably not less than 8 mm, particularly preferably not less than 10 mm, preferably not more than 30 mm, more preferably not more than 25 mm, and particularly preferably not more than 20 mm. The length L2 of the second magnet 22 is, for example, preferably not less than 3 mm, more preferably not less than 5 mm, even more preferably not less than 8 mm, particularly preferably not less than 10 mm, preferably not more than 30 mm, more preferably not more than 25 mm, even more preferably not more than 20 mm, and particularly preferably not more than 15 mm. The length L3 of the third magnet 23 is, for example, preferably not less than 5 mm, more preferably not less than 8 mm, particularly preferably not less than 10 mm, preferably not more than 30 mm, more preferably not more than 25 mm, and particularly preferably not more than 20 mm. The length L1 of the first magnet 21, the length L2 of the second magnet 22, and the length L3 of the third magnet 23 are all those along the direction X of the optical axis.

The magnetic circuit 11 is not limited to the structure that includes the first magnet 21, the second magnet 22, and the third magnet 23, each provided with a through hole. For example, the magnetic circuit 11 may be composed of a single magnet having a through hole.

A paramagnetic material can be used as the Faraday element 24. A glass material is preferably used as the paramagnetic material. The Faraday element 24 made of a glass material is less likely to cause variations in Verdet constant and reduction in extinction ratio due to defects and so on, which single-crystal materials would have, is less affected by stress from an adhesive material, and therefore can maintain a stable Verdet constant and a high extinction ratio.

The glass material for use as the Faraday element 24 preferably contains at least one type of rare earth element selected from among Ce, Pr, Nd, Pm, Sm, Eu, Gd, Tb, Dy, Ho, Er, and Tm. Among them, Tb is preferably contained in the glass material. Tb in the glass material is present in a trivalent or tetravalent state, but all of these Tb states are expressed as Tb₂O₃ equivalents herein.

In the glass material for use as the Faraday element 24, the proportion of Tb³⁺ to the total amount of Tb is preferably not less than 55%, more preferably not less than 60%, even more preferably not less than 80%, and particularly preferably not less than 90%. If the proportion of Tb³⁺ to the total amount of Tb is too small, the light transmittance at wavelengths of 300 nm to 1100 nm is likely to decrease.

The glass material that can be used as the Faraday element 24 is, for example, a glass material containing, in terms of % by mole, 20% to 80% Tb₂O₃, 20% to 70% B₂O₃+P₂O₅, and 0% to 45% SiO₂.

The content of Tb₂O₃ is, in terms of % by mole, preferably 20% to 80%, more preferably 30% to 80%, even more preferably 40% to 80%, and particularly preferably 51% to 80%. When the content of Tb₂O₃ is within the above range, a good Faraday effect can be more effectively obtained.

B₂O₃+P₂O₅ (the sum of the contents of B₂O₃ and P₂O₅) is, in terms of % by mole, preferably 20% to 70%, more preferably 25% to 60%, even more preferably 30% to 55%, and particularly preferably 30% to 45%. By defining the sum of the contents of B₂O₃ and P₂O₅ within the above range, the range of vitrification can be particularly easily extended. The respective preferred contents of B₂O₃ and P₂O₅ are as follows.

The content of B₂O₃ is, in terms of % by mole, preferably 0% to 70%, more preferably 0% to 60%, even more preferably 0% to 55%, and particularly preferably 1% to 45%. When the content of B₂O₃ is within the above range, a Faraday effect can be obtained and, concurrently, the range of vitrification can be further extended.

The content of P₂O₅ is, in terms of % by mole, preferably 0% to 70%, more preferably 0% to 60%, even more preferably 0% to 55%, and particularly preferably 1% to 45%. When the content of P₂O₅ is within the above range, a Faraday effect can be obtained and, concurrently, the range of vitrification can be further extended.

The content of SiO₂ is, in terms of % by mole, preferably 0% to 45%, more preferably 0% to 40%, even more preferably 0% to 35%, and particularly preferably 1% to 30%. When the content of SiO₂ is within the above range, a Faraday effect can be obtained and, concurrently, the range of vitrification can be further extended.

A paramagnetic material other than a glass material can be used as the Faraday element 24. For example, paramagnetic monocrystals or ceramics can be used as the Faraday element 24. For example, monocrystals of Tb₃Ga₅O₁₂, Tb₃Al₅O₁₂, Tb₃Sc₂Al₃O₁₂, Y₃Al₅O₁₂, Tb₂Hf₂O₇, LiTbF₄, NaTbF₄ or CeF₃ can be used as the Faraday element 24. Alternatively, Tb-Ga-based oxide ceramics, Tb-Al-based oxide ceramics, Tb-Sc-Al-based oxide ceramics, Y-Al-based oxide ceramics, Tb-Hf-based oxide ceramics, Tb-based fluoride ceramics or Ce-based fluoride ceramics can be used as the Faraday element 24.

The cross-sectional shape of the Faraday element 24 is not particularly limited, but is preferably circular for the purpose of having a homogeneous Faraday effect. The diameter of the Faraday element 24 may be, for example, not less than 1 mm and not more than 10 mm. Particularly, in using high-power laser light, the diameter of the Faraday element 24 may be not less than 5 mm, not less than 10 mm, more than 10 mm, not less than 15 mm, and particularly not less than 20 mm.

The length of the Faraday element 24 is preferably not less than 1 mm, more preferably not less than 3 mm, even more preferably not less than 5 mm, preferably not more than 20 mm, more preferably not more than 15 mm, and even more preferably not more than 12 mm. When the length of the Faraday element 24 is within the above range, the rotation angle of the Faraday rotator 4 can be more certainly adjusted within a desired range. Particularly, in using high-power laser light, the length of the Faraday element 24 may be not less than 10 mm, not less than 20 mm, more than 20 mm, not less than 30 mm, and particularly not less than 40 mm.

The Faraday rotator 4 is preferably used at a wavelength of 350 nm to 1300 nm, more preferably used at a wavelength of 450 nm to 1200 nm, even more preferably used at a wavelength of 500 nm to 1200 nm, particularly preferably used at a wavelength of 800 nm to 1100 nm, and most preferably used within a wavelength range of 900 nm to 1100 nm.

### (First Polarizer and Second Polarizer)

As shown in Fig. 3, the first polarizer 2 can be disposed at one end of the magnetic circuit 11 in the direction X of the optical axis. The second polarizer 3 can be disposed at the other end of the magnetic circuit 11 in the direction X of the optical axis. For example, a polarization beam splitter can be used as each of the first polarizer 2 and the second polarizer 3. An example of the polarization beam splitter that can be used is a polarization beam splitter formed of two triangular prisms bonded together through a polarization beam splitting film. For example, glass can be used as a material for the prisms.

### (Light Exit Portion)

The optical isolator according to the present invention may further include a light exit portion. The light exit portion is an opening provided in a housing of the optical isolator. With the use of the opening, light branched off inside the housing can be extracted. The shape of the opening is not particularly limited so long as it is a shape that enables extraction of light reflected by the second polarizer 3.

Fig. 7 is a schematic view for illustrating an example of a light exit portion.

In an optical isolator 1A shown in Fig. 7, the above-described first polarizer 2, second polarizer 3, and Faraday rotator 4 are disposed inside a housing 30. One end 30a of the housing 30 is an end provided on a light incident side. Therefore, in the interior of the housing 30, the first polarizer 2 is disposed on the end 30a side. On the other hand, the other end 30b of the housing 30 is an end provided on a light exit side. Therefore, in the interior of the housing 30, the second polarizer 3 is disposed on the end 30b side. Furthermore, in the interior of the housing 30, the Faraday rotator 4 is disposed between the first polarizer 2 and the second polarizer 3 in the direction X of the optical axis. The housing 30 is further provided with a light exit portion 31 for use in extracting light branched off inside the housing 30. The ends 30a, 30b of the housing 30 and the light exit portion 31 are connected with respective optical fibers 32.

As described previously, in the second polarizer 3, part of the light having entered the second polarizer 3 can be extracted as reflected light. In the optical isolator 1A, this reflected light can be emitted from the light exit portion 31. Then, by connecting the light emitted from the light exit portion 31 to a TAP port in axial alignment and extracting it through the TAP port, the intensity of transmitted light of the optical isolator 1A can be monitored.

As a method for monitoring the intensity of transmitted light of an optical isolator, there is conceivable a method in which, as in an optical isolator 101 according to a comparative example shown in Fig. 12, a fiber coupler 103 is connected to an optical fiber 102 located on a light exit side and light branched off by and extracted from the fiber coupler 103 is monitored. However, the fiber coupler has a problem of its laser resistance being insufficient when the output power of laser light is increased.

Unlike the above, in the optical isolator 1A shown in Fig. 7, part of light can be reflected by the second polarizer 3 and can be easily extracted as reflected light without use of a fiber coupler. Therefore, the optical isolator 1A has excellent laser resistance. Thus, in the optical isolator 1A, the laser output power can be increased.

Fig. 8 is a schematic view for illustrating another example of a light exit portion.

In the optical isolator 1B shown in Fig. 8, a photodiode 33 is connected directly to a light exit portion 31. In this embodiment, the light exit portion 31 is an opening provided in the housing 30. The rest is the same as in the optical isolator 1A shown in Fig. 7. The opening is preferably covered with a transparent material, such as glass.

As for the optical isolator 1B, the intensity of transmitted light of the optical isolator 1B can be monitored by directly capturing reflected light emitted from the light exit portion 31.

Also in the optical isolator 1B, part of light can be reflected by the second polarizer 3 and can be easily extracted as reflected light. Therefore, the optical isolator 1B has excellent laser resistance. Thus, also in the optical isolator 1B, the laser output power can be increased. In addition, since no tap port is used in the optical isolator 1B, the optical isolator 1B has the advantage of being free from the occurrence of a coupling loss at a tap port.

Structures of the light exit portion 31 include not only a structure in which, like the above-described one, reflected light from the optical isolator 1B is emitted to the outside of the housing 30, but also a structure in which an electric signal converted from reflected light is sent to the outside of the housing 30. For example, the latter comprises a structure in which a photodiode or the like is provided inside the housing 30, converts reflected light to an electric signal, and sends the electric signal obtained by conversion to the outside of the housing 30.

Fig. 9(a) is a schematic cross-sectional view of the optical isolator according to the one embodiment of the present invention along the direction of an optical axis, and Fig. 9(b) is a simplified view of the cross section shown in Fig. 9(a). An optical isolator 1C shown in Figs. 9(a) and 9(b) shows an example of a specific structure of the optical isolator 1 shown in Fig. 1.

The optical isolator 1C includes a first polarizer 2, a second polarizer 3, a Faraday rotator 4, and a housing 6. The first polarizer 2 is provided on a light incident side in a direction X of the optical axis. The second polarizer 3 is provided on a light exit side in the direction X of the optical axis. The Faraday rotator 4 is provided between the first polarizer 2 and the second polarizer 3.

The Faraday rotator 4 includes a magnet 7 and a Faraday element 8. In this embodiment, the magnet 7 has an angular tube shape. Furthermore, the magnet 7 has a through hole 7a and light passes through the through hole 7a. The direction where light passes through the through hole 7a in the magnet 7 is defined as the direction X of the optical axis. Furthermore, the Faraday element 8 is made of a paramagnetic material capable of transmitting light.

The magnet 7 includes a first end surface 7b, a second end surface 7c, and a side surface 7d. The first end surface 7b and the second end surface 7c are opposed to each other in the direction X of the optical axis. The first end surface 7b is one end surface of the magnet 7 in the direction X of the optical axis. The second end surface 7c is the other end surface of the magnet 7 in the direction X of the optical axis. The side surface 7d is connected to the first end surface 7b and the second end surface 7c. Furthermore, the through hole 7a is open at both the first end surface 7b and the second end surface 7c.

As shown in Fig. 10, the cross-sectional shape of the through hole 7a in the magnet 7 along a direction orthogonal to the direction X of the optical axis is square. The cross-sectional shape of the through hole 7a is not limited to an approximately rectangular shape, including a square as just described, and may be an approximately circular shape, including a circular shape, or other shapes. The shape of the magnet 7 is not limited to an angular tube shape and may be, for example, a cylindrical shape.

A tubular member 9 is provided inside the through hole 7a of the magnet 7. In this embodiment, the tubular member 9 is a metallic pipe. The tubular member 9 has a cylindrical shape. Furthermore, the tubular member 9 has a through hole 9a and light passes through the through hole 9a. The cross-sectional shape of the through hole 9a in the tubular member 9 along a direction orthogonal to the direction X of the optical axis is circular. In this embodiment, SUS304 is used as a material for the tubular member 9. However, the shape and material of the tubular member 9 are not particularly limited.

The Faraday element 8 is disposed inside the through hole 9a of the tubular member 9. However, the tubular member 9 need not necessarily be provided. In this case, it is sufficient that the Faraday element 8 is provided inside the through hole 7a of the magnet 7.

The first polarizer 2 is provided on the side of the magnet 7 at which the first end surface 7b is located. The second polarizer 3 is provided on the side of the magnet 7 at which the second end surface 7c is located. The first polarizer 2 and the second polarizer 3 are provided with the Faraday element 8 in between in the direction X of the optical axis and opposed to each other.

Furthermore, in the optical isolator 1C, the first polarizer 2, the second polarizer 3, and the Faraday rotator 4 are provided in the interior of the housing 6. For example, aluminum alloy can be used as a material for the housing 6. However, the material for the housing 6 is not particularly limited.

In the optical isolator 1C, light passes through a first fiber collimator 10a and then enters the first polarizer 2. The light passes through the first polarizer 2, is converted to linearly polarized light, and then enters the Faraday element 8. Then, the plane of polarization of the light having passed through the Faraday element 8 rotates. The light having been emitted from the Faraday element 8 enters the second polarizer 3. The light having passed through the second polarizer 3 passes through a second fiber collimator 10b and is then guided from the optical isolator 1C to an optical fiber.

Also in the optical isolator 1C, assuming that the angle of the light transmission axis of the second polarizer 3 inclined to the light transmission axis of the first polarizer 2 is a placement angle of the second polarizer 3, the placement angle of the second polarizer 3 is different from the rotation angle of the Faraday rotator 4. Therefore, part of the light having entered the second polarizer 3 does not travel linearly through the second polarizer 3 and can be extracted as reflected light I₂. By measuring the intensity of the extracted reflected light I₂, the intensity of transmitted light of the optical isolator 1C can be monitored.

In the optical isolator 1C, as shown in Figs. 9(a) and 9(b), a portion of the wall of the housing 6 is provided with a light exit portion 5 which is an opening. As for the optical isolator 1C, reflected light I₂ branched off in the interior of the housing 6 can be extracted with the use of the light exit portion 5 and the intensity of the extracted reflected light I₂ can be measured.

The shape of the light exit portion 5 is not particularly limited so long as it can allow the reflected light I₂ to pass through the light exit portion 5, but may be, for example, approximately circular, approximately rectangular or an elongated hole.

The size of the light exit portion 5 is not particularly limited, but may be, for example, not less than 1 mm and not more than 8 mm. The light exit portion 5 may be covered with a transparent member through which the reflected light I₂ can transmit and an antireflection film may be formed on the transparent member for ease of transmission of the reflected light I₂.

In the above embodiment, the light exit portion 5 has been described as a form of an opening provided in the housing 6, but is not limited to this form. For example, the light exit portion 5 may comprise a form in which a photodiode or the like is provided inside the housing 6 and convert a light signal to an electric signal in the interior of the housing 6 and the electric signal is extracted out of the housing 6.

Fig. 11 is a perspective view of an optical isolator according to a variation of the present invention. This variation is different from the optical isolator 1C in that the first fiber collimator 10a and the second fiber collimator 10b are not provided. The rest of an optical isolator 1D according to this variation has the same structure as in the optical isolator 1C. The optical isolator 1D can be used as an optical isolator in free space. Also as for the optical isolator 1D according to this variation, the intensity of transmitted light of the optical isolator 1D can be monitored by allowing the second polarizer 3 to reflect part of light having entered the second polarizer 3 to extract the part of light as reflected light I₂ and measuring the intensity of the extracted reflected light I₂.

### [Optical Monitoring Method]

An optical monitoring method according to the present invention is a method for monitoring the intensity of transmitted light of an optical isolator. More specifically, the method is a method for monitoring the intensity of transmitted light of an optical isolator 1 including a first polarizer 2, a second polarizer 3, and a Faraday rotator 4, by allowing the second polarizer 3 to reflect part of light incident on the second polarizer 3 and thus extracting the part of light, and measuring the intensity of the extracted part of light.

In this optical monitoring method, the intensity of transmitted light of the optical isolator 1 can be always monitored. Therefore, even if any element of the optical isolator 1 is damaged and the intensity of transmitted light thus decreases, it can be easily detected that the element has been damaged. In addition, without use of a fiber coupler having poor laser resistance, the intensity of transmitted light of the optical isolator 1 can be monitored. Therefore, the laser output power can be increased.

The intensity of laser light to be transmitted through the optical isolator 1 is preferably not less than 300 mW, more preferably not less than 500 mW, even more preferably not less than 1 W, still even more preferably not less than 5 W, and particularly preferably not less than 10 W. The optical monitoring method according to the present invention is less likely to damage the optical isolator 1 even when the intensity of laser light is increased and, therefore, can meet increasing the output power of laser light. The upper limit of the intensity of laser light is, for example, not more than 150 W and preferably not more than 50 W.

However, the intensity of laser light to be transmitted through the optical isolator 1 is not limited to the above. For example, for the purpose of laser processing, laser analysis, laser nuclear fusion or so on, high-powered laser light of not less than 1 kW or particularly not less than 10 kW may be used.

Furthermore, the percentage of light extracted by reflection from the second polarizer 3 is, relative to the total amount of light entering the second polarizer 3, preferably not less than 0.1%, more preferably not less than 0.3%, preferably not more than 10%, and more preferably not more than 4%. When the percentage of light extracted by reflection from the second polarizer 3 is the above lower limit or more, the intensity of transmitted light of the optical isolator 1 can be more certainly monitored. Moreover, when the percentage of light extracted by reflection from the second polarizer 3 is the above upper limit or less, the amount of transmitted light passing through the second polarizer 3 can be further increased. The percentage of light extracted by reflection from the second polarizer 3 can be adjusted by the rotation angle of the Faraday rotator 4 or the placement angle of the second polarizer 3.

### [Examples]

Hereinafter, the present invention will be described in further detail with reference to specific examples. The present invention is not at all limited by the following examples and modifications and variations may be appropriately made therein without changing the gist of the invention.

### (Example 1)

In Example 1, an optical isolator was made to have an optical design shown in Figs. 1 and 2. A columnar Faraday element having a diameter of 3 mm and a length of 10 mm was used for the Faraday rotator. The outer diameter of the magnet was 20 mm, the length of the magnet in the direction of the optical axis was 30 mm, and the diameter of the through hole was 3.2 mm.

A polarization beam splitter (PBS) was used as the first polarizer 2 and disposed to reach a maximum amount of transmitted light when the polarization angle was 0°. The Faraday rotator 4 was disposed inside the magnetic circuit and adjusted to a length at which the rotation angle of the Faraday rotator 4 was 43°. A polarization beam splitter (PBS) was used as the second polarizer 3 and the second polarizer 3 was disposed to have a placement angle of 47°. The optical isolator 1 made in this manner was irradiated with laser light having a wavelength of 1030 nm to allow the second polarizer 3 to reflect part of the light, the part of light was extracted as monitoring light, and the light intensity of the monitoring light was measured. In Example 1, the percentage of light having passed through and emitted from the second polarizer 3 (the transmittance of emitted light) was 99%. On the other hand, the percentage of light extracted by reflection from the second polarizer 3 (the percentage of monitoring light extraction) was 1%.

### (Examples 2 to 5)

Optical isolators were made in the same manner as in Example 1 except that the placement angle of the first polarizer 2, the placement angle of the second polarizer 3, and the rotation angle of the Faraday rotator 4 were changed as shown in Table 1 below, and monitored in terms of the intensity of transmitted light. The respective transmittances of emitted light and the respective percentages of monitoring light extraction of the optical isolators made in Examples 2 to 5 are shown in Table 1 below.

**[Table 1]**

| | Ex. 1 | Ex. 2 | Ex. 3 | Ex. 4 | Ex. 5 |
|---|---|---|---|---|---|
| Placement Angle of First Polarizer (°) | 0 | 0 | 0 | 0 | 0 |
| Rotation Angle of Faraday Rotator (°) | 43 | 42 | 40 | 38 | 36 |
| Placement Angle of Second Polarizer (°) | 47 | 48 | 50 | 52 | 54 |
| Transmittance of Emitted Light(%) | 99 | 98 | 95 | 92 | 90 |
| Percentage of Monitoring Light Extraction (%) | 1 | 2 | 5 | 8 | 10 |

As shown in Table 1, the percentages of monitoring light extraction of the optical isolators made in Examples 1 to 5 were 1% to 10%, from which it was confirmed that a sufficient intensity of transmitted light could be monitored within this range. Furthermore, it was confirmed that reflected return light in the optical isolators made in Examples 1 to 5 could not transmit through the first polarizer and could be blocked and, therefore, these optical isolators functioned as optical isolators.

### [Reference Signs List]

1, 1A, 1B, 1C, 1D ... optical isolator
2 ... first polarizer
3 ... second polarizer
4 ... Faraday rotator
5, 31 ... light exit portion
6, 30 ... housing
7 ... magnet
7a, 9a, 12 ... through hole
7b ... first end surface
7c ... second end surface
7d ... side surface
8, 24 ... Faraday element
9 ... tubular member
10a ... first fiber collimator
10b ... second fiber collimator
11 ... magnetic circuit
21 ... first magnet
22 ... second magnet
23 ... third magnet
30a, 30b ... end
32 ... optical fiber
33 ... photodiode

## Claims

1. An optical isolator comprising:
a first polarizer provided on a light incidence side of the optical isolator;
a second polarizer provided on a light exit side of the optical isolator; and
a Faraday rotator provided between the first polarizer and the second polarizer,
wherein assuming that an angle of a light transmission axis of the second polarizer inclined to a light transmission axis of the first polarizer is a placement angle of the second polarizer, the placement angle of the second polarizer is different from a rotation angle of the Faraday rotator.

2. The optical isolator according to claim 1, wherein a sum of the placement angle of the second polarizer and the rotation angle of the Faraday rotator is within a range of 90° ± 2°.

3. The optical isolator according to claim 1, wherein when the placement angle of the second polarizer is 45° + A° and the rotation angle of the Faraday rotator is 45° - A°, A is not less than 0.5 and not more than 10.

4. The optical isolator according to any one of claims 1 to 3, further comprising a light exit portion that allows part of light incident on the second polarizer to be extracted therethrough.

5. The optical isolator according to claim 4, wherein a tap port or a photodiode is connected directly or indirectly to the light exit portion.

6. The optical isolator according to any one of claims 1 to 3, wherein the Faraday rotator includes a Faraday element disposed inside a tubular magnet and made of a paramagnetic material through which light transmits.

7. The optical isolator according to claim 6, wherein the Faraday element made of a paramagnetic material is a glass material.

8. The optical isolator according to claim 7, wherein the glass material contains, in terms of % by mole, 20% to 80% Tb₂O₃, 20% to 70% B₂O₃+P₂O₅, and 0% to 45% SiO₂.

9. An optical monitoring method for monitoring an intensity of transmitted light of an optical isolator that comprises: a first polarizer provided on a light incidence side of the optical isolator; a second polarizer provided on a light exit side of the optical isolator; and a Faraday rotator provided between the first polarizer and the second polarizer, the optical monitoring method comprising:
a step of extracting part of light by allowing the second polarizer to reflect part of light incident on the second polarizer; and
a step of monitoring the intensity of transmitted light of the optical isolator by measuring an intensity of the extracted part of light.

10. The optical monitoring method according to claim 9, wherein an intensity of laser light allowed to transmit through the optical isolator is not less than 300 mW and not more than 150 W.
